# FASCICULE DE BREVET EUROPEEN

(11) **EP 0 923 436 B1**
(45) Date de publication et mention de la délivrance du brevet: **09.04.2003**
(21) Numéro de dépôt: 97947099.4
(22) Date de dépôt: 20.11.1997
(51) Int. Cl.: B28B 1/52

(54) **PROCEDE DE FABRICATION DE PLAQUES RENFORCEES**
VERFAHREN ZUM HERSTELLEN VON VERSTÄRKTEN PLATTEN
METHOD FOR MAKING REINFORCED SLABS

(30) Priorité: 28.11.1996 FR 9614568
(43) Date de publication de la demande: 23.06.1999
(73) Titulaire: Saint-Gobain Materiaux de Construction S.A.S -SGMC S.A.S., F-92400 Courbevoie (FR)
(72) Inventeur: LE FLOC'H, André, F-36100 Issoudun (FR); GUYOT, Didier, F-77210 Avon (FR)
(74) Mandataire: Muller, René
(86) Numéro de dépôt international: FR9702089
(87) Numéro de publication internationale: WO98023423

(56) Documents cités:
- EP-A- 0 173 873
- EP-A- 0 719 744
- MEYER A: "WELLCRETE - EINE FORTSCHRITTLICHE TECHNOLOGIE FUER DIE KOSTENGUENSTIGE PRODUKTION HOCHWERTIGER FASERBETONPRODUKTE" BETONWERK + FERTIGTEIL TECHNIK, vol. 57, no. 8, 1 août 1991, pages 70-74, 76 - 79, XP000230644

## Description

La présente invention concerne un procédé de fabrication de plaques et/ou de produits façonnés à partir de pâte à prise hydraulique renforcés par des fibres. De tels produits servent, en particulier, de couvertures sèches ou de support de tuiles pour toitures. Mais d'autres applications multiples peuvent être envisagées, telles que des panneaux de façade, des panneaux de partitions, etc...

Un procédé de fabrication en continu de plaques de béton renforcées de fibres textiles est par exemple décrit dans le brevet européen EP 0 173 873. Selon ce procédé, la pâte à prise hydraulique, gâchée avec de l'eau, est appliquée par exemple par calandrage en une épaisseur donnée, sur un support reposant sur un tapis se déplaçant en continu avec le tapis. Des fragments de fibres textiles provenant d'une coupeuse sont répandus, en quantité dosée, sur la surface de la pâte préfixée, déplacée en continu, puis y sont pressés, la pâte étant compactée simultanément. A partir des plaques obtenues, on réalise des produits façonnés dont la surface est uniformément lisse, mais aussi si on le souhaite colorée et/ou structurée ou profilée et/ou traitée.

Un tel procédé permet de travailler en continu en appliquant par exemple par calandrage la pâte à prise hydraulique en une épaisseur uniforme sur toute la largeur de travail. La pâte à prise hydraulique gâchée avec de l'eau présente une maniabilité et une fluidité adéquate pour l'opération de calandrage, sans qu'il soit nécessaire d'effectuer le gâchage avec un excédent d'eau.

L'utilisation d'un support reposant sur le tapis de convoyage, permet de créer une surface de plaque propre, lisse, mais aussi si on le souhaite colorée et/ou structurée ou profilée.

Par ailleurs, selon une variante du procédé décrit dans le brevet EP O 173 873, on applique ou intègre, en supplément de l'armature des fragments de fibres textiles, des fibres textiles continues dans la pâte de la plaque à fabriquer.

Les plaques ainsi obtenues présentent de bonnes propriétés mécaniques, en particulier une bonne résistance à la rupture. Cependant, ces plaques présentent une légère sensibilité à la fissuration.

Ces fissures sont en elles-mêmes quasi-invisibles à l'oeil nu car elles restent peu profondes ; en effet l'armature de fibre évite la propagation des fissures. Ces fissures n'ont pas d'incidence grave sur la résistance de la plaque, mais peuvent toutefois poser des problèmes vis-à-vis de l'esthétique du produit.

Il est par ailleurs connu de la demande de brevet EP 0 719 744 d'introduire dans des matériaux à base de ciment, lors de leur préparation, des fibres de verres ou de roche pour renforcer la structure du matériau une fois coulé et mûri. En particulier l'ajout de fibres dans un béton ou un mortier améliore son comportement ductile après mûrissement.

Le terme laine de roche désigne dans la présente description, de la façon bien connue de l'homme du métier, un matériau susceptible d'être obtenu par filage d'une composition minérale à l'état fondu à base de roche tel que du basalte et/ou de laitier de haut fourneau, la composition pouvant être éventuellement modifiée par l'ajout de différents oxydes.

Cependant lors du gâchage de tels bétons ou mortiers, il est courant de rencontrer des difficultés de mélangeage entre les agrégats du béton et de fibres du type laine de verre ou laine de roche. En effet, ces fibres se présentent sous la forme de balle comportant des paquets de fibres enchevêtrées présentant un volume extérieur important, qui sont difficiles à répartir de manière homogène dans le béton ou le mortier lors de sa préparation.

De plus, on constate que l'ajout de fibres conduit à une mauvaise maniabilité du matériau due à une réduction de sa fluidité. Une solution pour pallier ce problème est d'ajouter de l'eau en excès afin de retrouver la fluidité d'origine du matériau. Mais cette solution nuit à la qualité du produit réalisé après mûrissement, puisque le risque de fissuration est augmenté du fait de la présence excessive d'eau lors de la mise en oeuvre du béton ou du mortier.

La demande de brevet EP 0 719 744 propose pour remédier à ce problème, un additif fibreux pour matériaux à base de ciment. Cet additif fibreux comporte de la laine de roche formée de fibres d'un diamètre moyen compris entre 6 et 25 µm et ensimée soit avec une huile minérale, soit avec une substance tensio-active seule ou associée à une substance anti-mousse.

L'additif fibreux ainsi introduit dans un béton ou un- mortier se mélange facilement et en quantité importante lors du gâchage. Ainsi, il est possible de mettre en oeuvre un béton ou un mortier présentant une répartition homogène des fibres sans qu'il soit nécessaire d'ajouter de l'eau en excès, Le béton ou le mortier ainsi formé conserve alors de bonnes qualités mécaniques après mûrissement.

L'additif fibreux selon le brevet EP-0 719 744 peut également être mis en oeuvre avec un béton ou un mortier comportant des fibres de renforcement dites textiles. La combinaison de fibres de renforcement du type textile et de l'additif fibreux permet alors l'obtention de caractéristiques avantageuses complémentaires. Les fibres de renforcement assurent en effet de bonnes caractéristiques du matériau après mûrissement, et en particulier, améliorent son caractère ductile, alors que l'additif fibreux confère au matériau une plage d'élasticité élargie.

Par contre, le béton ou le mortier ainsi obtenu présente, du fait de la présence de fibres, une fluidité et maniabilité très limitée avant sa mise en forme, celle-ci devant être alors réalisée par extrusion ou projection. De tels procédés permettent de pallier à ce manque de fluidité-et maniabilité par l'emploi d'une force de pression suffisamment importante pour entraîner le matériau.

L'invention a pour but un procédé de fabrication en continu de plaques et/ou produits façonnés à partir de pâte à prise hydraulique à armature de fibres d'une manière telle que les plaques renforcées ne présentent pas de fissures au cours du temps ou que l'apparition des fissures soit diminuée.

En effet, la présente invention a pour objet un procédé de fabrication en continu permettant d'apporter une solution à chacun des problèmes évoqués ci-dessus, et en particulier de permettre d'obtenir un mélange homogène et renforcé par des fibres, d'obtenir une bonne fluidité du matériau à base de pâte à prise hydraulique, tout en lui conférant une certaine tenue au cours du procédé de fabrication et d'obtenir un produit présentant une bonne résistance à la fissuration.

Ce but est atteint selon l'invention par un procédé de fabrication en continu de plaques et/ou produits façonnés à partir de pâte à prise hydraulique à armatures de fibres selon lequel la pâte à prise hydraulique, gâchée avec de l'eau, est calandrée en une épaisseur donnée et dans laquelle sont ensuite pressés des fragments de fibres provenant d'une coupeuse, procédé dans lequel on ajoute avant le calandrage un additif fibreux à la pâte à prise hydraulique.

Selon l'invention, l'additif fibreux est un additif comprenant de la laine de roche, de préférence de la laine de roche formée de fibres d'un diamètre moyen compris entre 3 et 25 µm et ensimée soit avec une huile, soit avec une substance tensio-active seule ou associée à une substance anti-mousse.

L'additif fibreux selon l'invention est formé à base de fibres de laine de roche de diamètre moyen compris entre 3 et 25 µm, avantageusement entre 8 et 20 µm. Il est à noter que les fibres de la laine de roche classique du commerce ont un diamètre moyen compris entre 3 et 5 µm. Le choix d'un diamètre plus élevé pour les fibres de laine de roche ajoutée à la pâte à prise hydraulique est destiné à améliorer encore la dispersion et le mélange dans la pâte.

Les fibres de roche, qu'elles soient ensimées avec une huile ou avec une substance tensio-active associée ou non à une substance anti-mousse, se mélangent facilement et en quantité importante dans un béton ou un mortier lors du gâchage. Ainsi, il est possible de mettre en oeuvre un béton ou un mortier pouvant être calandré et ayant une répartition homogène de fibres de laine de roche. Le béton ou le mortier ainsi formé conserve alors de bonnes qualités mécaniques après mûrissement.

Les inventeurs ont su mettre en évidence qu'un mortier ou béton contenant des fibres de laine de roche peut être mis en forme par calandrage. Ce résultat est tout à fait surprenant, sachant qu'une fluidité importante du béton ou mortier est nécessaire pour que celui-ci soit calandré, la force d'entraînement du mortier étant limitée à celle exercée par le convoyeur. En outre, conformément à ce qui a été dit précédemment, un mortier ou béton comportant des fibres, voit sa fluidité et sa maniabilité diminuée, ce qui conduit un homme du métier à considérer qu'un tel produit est impossible à calandrer de la façon proposée par l'invention.

Par ailleurs, il a été constaté que l'ajout des fibres de laine de roche à la pâte à prise hydraulique du procédé de fabrication de plaques du brevet EP 0 173 873 permet d'obtenir un produit d'une qualité supérieure vis-à-vis des propriétés mécaniques recherchées pour la réalisation des plaques selon l'invention.

Selon une variante de l'invention, on allège le taux de fibres de renforcement courtes du type textile par rapport aux quantités connues. Ainsi, pour un volume inférieur de fibres de renforcement courtes, on obtient alors un produit ayant des propriétés mécaniques équivalentes à celles des plaques déjà réalisées et présentant par contre une plage d'élasticité du matériau élargie, l'ajout de fibres de laine de roche permettant une diminution de la quantité de fibres de renforcement intégrés ensuite dans la pâte. On obtient ainsi un produit d'une qualité équivalente présentant une meilleure résistance à la fissuration.

Les inventeurs ont su mettre en évidence la nécessité d'une quantité minimum de fibres de renforcement du type textile pour garder un renforcement suffisant vis-à-vis des produits obtenus par le procédé déjà connu. En effet, il a été constaté qu'un renforcement uniquement à base de fibre de laine de roche ne présente pas les propriétés mécaniques recherchées pour la réalisation des plaques selon l'invention.

Selon une réalisation préférée de l'invention, en incorporant un taux d'additifs fibreux compris entre 0,5 et 2 % , c'est-à-dire 10 et 40 kg d'additif fibreux par m³ de pâte à prise hydraulique humidifiée pour un taux de fibres de renforcement du type textile compris entre 20 et 100 kg, on obtient ainsi un produit d'une qualité équivalente à celle d'une plaque obtenue selon le procédé déjà connu, celle-ci ayant environ 50 % de fibres du type textile en plus.

Selon une variante de l'invention, on applique et/ou incorpore en supplément des faisceaux de fibres continues dans la pâte armée de fragments de fibres. Le fait d'intégrer des fibres continues permet d'augmenter encore la résistance de la plaque.

Selon un mode préféré de l'invention, on applique et/ou incorpore les faisceaux de fibres continues en surface de la pâte armée de fragments de fibres après l'opération de pressage. On obtient ainsi un renforcement en surface dont la mise en oeuvre ne perturbe pas celle du procédé de fabrication en continu des plaques renforcées de fibres coupées.

Selon une variante avantageuse de l'invention, l'opération qui consiste à répandre et à presser les fragments de fibres dans la pâte s'effectue en couches successives et superposées de pâte déplacée en continu. Ainsi on obtient une plaque d'une certaine épaisseur dans laquelle les fragments de fibres sont imprégnés de manière régulière. De préférence, on intègre des fibres continues entre deux couches superposées de sorte que le renforcement des plaques réalisées soit bien homogène.

L'invention décrit ainsi la fabrication de plaques et/ou produits façonnées à armatures de fibres de verre contenant un additif fibreux et plus particulièrement un additif fibreux comportant de la laine de roche. Les plaques et/ou produits ainsi obtenus peuvent comporter également des faisceaux de fibres continues et être constitués de plusieurs-couches de pâte armée de fragments de fibres.

Les produits ainsi obtenus présentent une bonne résistance à la fissuration par un élargissement de la plage d'élasticité du matériau tout en conservant une bonne maniabilité de la pâte dans le procédé de fabrication.

Mise à part le fait d'augmenter la plage d'élasticité du matériau, l'additif fibreux contenant de la laine de roche présente d'autres avantages non négligeables. Tout d'abord, les fibres de laine de roche comme les fibres textiles de renforcement du type de celles commercialisées sous le nom commercial CEMFIL présentent une bonne résistance à l'alcalinité de pâte cimentaire. De plus, les fibres de laine de roche sont bien moins onéreuses que les fibres du type CEMFIL. Ainsi, le procédé selon l'invention permet de réaliser des plaques d'un coût inférieur de fabrication en remplaçant une partie des fibres de type textile par des fibres de laine de roche.

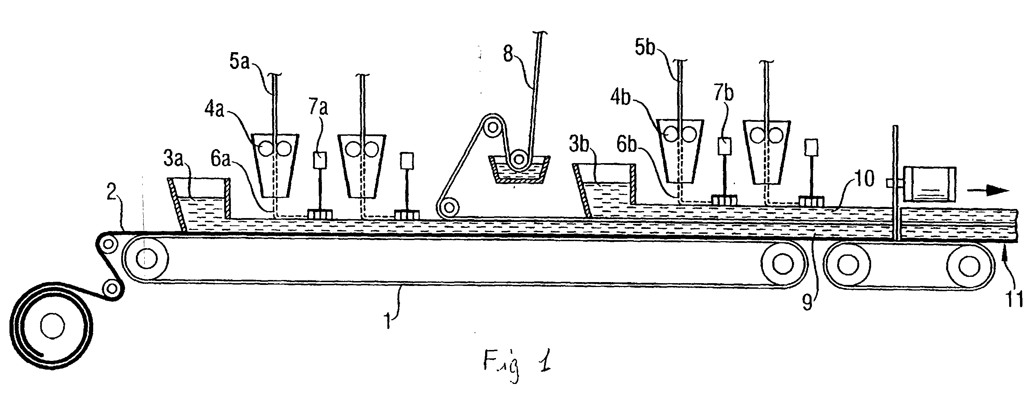

D'autres détails et caractéristiques avantageuses de l'invention ressortiront ci-après de la description d'un exemple de réalisation de l'invention en référence à la figure qui représente les différentes étapes d'un procédé de fabrication en continu selon l'invention.

La chaîne de fabrication selon l'exemple de réalisation est constituée de plusieurs postes de fabrication positionnés au-dessus d'un tapis 1 de convoyage sur lequel est placé un film support 2 destiné à recevoir la pâte.

Tout d'abord, on trouve une alimentation en pâte à prise hydraulique 3 suivie d'une calandreuse, non représentée sur la figure. En aval de la calandreuse sont placés alternativement des coupeuses 4 et des outils d'imprégnation 7, les opérations attachées à ces équipements pouvant s'effectuer en plusieurs étapes. En aval du dernier outil d'imprégnation 7, est positionné un dispositif permettant d'appliquer des faisceaux de fibres continues 8. A cet étape du procédé de fabrication, une première couche de pâte armée de fragments de fibres et de fibres continues défile sur le tapis 1. La deuxième étape consiste à déposer sur cette première couche une seconde couche armée de fragments de fibres On retrouve donc une alimentation en pâte 3, une calandreuse, non représentée sur la figure, et une succession de coupeuses 4 et d'outils d'imprégnation 7. Les deux couches superposées continuent de défiler sur le tapis 1. La dernière étape consiste alors à donner la forme définitive au produit à réaliser : cela consiste en une opération de formage si cela est nécessaire, en une opération de découpe de la bande obtenue et en une opération de durcissement.

Le procédé pour la mise en oeuvre de cette chaîne de fabrication est donc le suivant : sur un tapis 1 conçu par tous moyens connus de l'homme de métier, pour se déplacer en continu, auquel sont associés des éléments de guidage en fonction de la largeur souhaitée pour une plaque à fabriquer, éléments non représentés sur la figure, on place un support continu 2 destiné à recevoir la pâte. Le support 2 est de préférence plus large que la largeur de la plaque à fabriquer, prédéterminée et définie par l'écartement des éléments de guidage, de sorte que les bordures des grands côtés du support 2 dépassent suffisamment ou peuvent être appliquées sur les faces supérieures des éléments de guidage.

Pendant que le support 2 avance en même temps que le tapis 1, on dépose en continu, sur le support 2, une pâte à prise hydraulique 3 contenant un additif fibreux à base de laine de roche formée de fibres d'un diamètre moyen compris entre 3 et 25 µm et ensimée soit avec une huile, soit avec une substance tensio-active seule ou associée à une substance anti-mousse. La pâte ainsi déposée est d'épaisseur uniforme et de largeur définie par l'écartement des éléments de guidage. Ceci peut s'effectuer par exemple par calandrage de la pâte 3.

En aval de la calandreuse et au-dessus de la voie de transport de la pâte 3, est placée une coupeuse 4 qui éjecte en continu des fragments 6 de fibres du type textile 5 de longueur voulue à la surface de la pâte 3. Étant donné que la pâte 3 se déplace en continu sous la pluie de fragments 6 de fibres 5, les fragments 6 sont répartis de manière régulière à la surface de la pâte.

Dans un autre poste de fabrication, les fragments 6 sont ensuite pressés ou intégrés dans l'épaisseur de la pâte 3 en mouvement, à l'aide d'un outil 7 qui agit sur toute la largeur de la pâte. En réglant le déplacement de l'outil 7, on peut régler la profondeur de pénétration, et par conséquent la distribution des fibres dans la section transversale de la plaque. L'opération de répartition des fragments et d'imprégnation est renouvelée une seconde fois dans la même couche de la pâte 3.

En plus de l'armature de fragments 6 de fibres 5, on applique et/ou incorpore des fibres continues du type textile 8 à la surface de la pâte 3 de la plaque à fabriquer. Les fibres continues peuvent être appliquées par tous moyens connus de l'homme du métier. On obtient ainsi une couche de pâte armée 9.

On renouvelle ensuite toute l'opération qui vient d'être décrite mais en appliquant cette fois la pâte 3 sur la couche 9 précédemment obtenue qui continue de défiler du fait du déplacement du tapis 1 et sans appliquer et/ou intégrer des fibres continues. On obtient alors une couche 10 armée de fragments de fibres qui repose sur la couche 9 précédemment obtenue.

On obtient alors une bande 11 formée des couches 9 et 10 superposées.

Il ne reste donc plus qu'à découper et à former, si nécessaire, la bande 11 ainsi obtenue aux dimensions voulues des plaques à fabriquées, puis à les laisser durcir : Les plaques obtenues à partir de ce procédé sont ainsi renforcées de fibres de verre et de fibres de laine de roche. Elles sont, dans la variante présentée, constituées de deux couches superposées entre lesquelles sont disposées des fibres continues constituant un renforcement supplémentaire.

Les plaques ainsi obtenues présentent alors une bonne résistance à la fissuration, résistance supérieure aux plaques renforcées habituellement réalisées. Par ailleurs, l'ajout de l'additif fibreux modifie la fluidité et la maniabilité de la pâte dans le procédé de fabrication, mais il a été constaté de manière surprenante que la pâte restait suffisamment fluide pour être calandrée, tout en présentant une meilleure tenue lors de son déplacement à la sortie du tapis.

La technique de l'invention permet la réalisation, en particulier, de plaques ondulées présentant un double usage : soit couverture sèche, soit support de tuiles, pour toitures ou de plaques planes pour une simple couverture de toiture. Bien entendu, l'invention ne se limite pas à ces applications.

## Revendications

1. Procédé de fabrication en continu de plaques et/ou de produits façonnés à partir d'une pâte à prise hydraulique à armatures de fibres selon lequel la pâte à prise hydraulique, gâchée avec de l'eau est calandrée en une épaisseur donnée et dans laquelle sont ensuite pressés des fragments de fibres du type textile provenant d'une coupeuse, **caractérisé en ce qu'**on ajoute, avant le calandrage, un additif fibreux à la pâte à prise hydraulique.

2. Procédé de fabrication en continu de plaques et/ou de produits façonnées à partir d'une pâte à prise hydraulique selon la revendication 1, **caractérisé en ce que** ledit additif fibreux comprend de la laine de roche, formée de fibres d'un diamètre moyen compris entre 3 et 25 µm et ensimée soit avec une huile soit avec une substance tensio-active seule ou associée à une substance anti-mousse.

3. Procédé de fabrication de plaques et/ou de produits façonnés à partir d'une pâte à prise hydraulique selon la revendication 1 ou 2, **caractérisé en ce que** on ajoute à la pâte à prise hydraulique un taux d'additif fibreux compris entre 0,5 et 2 % pour un taux de fibres de type textile compris entre 1 et 5 %.

4. Procédé de fabrication en continu de plaques et/ou de produits façonnés à partir d'une pâte à prise hydraulique selon la revendication 1 ou 2, **caractérisé en ce que** l'on applique et/ou incorpore en supplément des fibres continues dans la pâte armée de fragments de fibres.

5. Procédé de fabrication de plaques et/ou de produits façonnés à partir d'une pâte à prise hydraulique selon la revendication 4, **caractérisé en ce que** l'on applique et/ou incorpore les fibres continues en surface de la pâte armée de fragments de fibres après l'opération de pressage.

6. Procédé de fabrication en continu de plaques et/ou de produits façonnés à partir d'une pâte à prise hydraulique selon l'une des revendications 1 à 5, **caractérisé en ce qu'**au moins deux couches de pâte déplacée en continu et armée de fragments de fibres sont réalisées successivement et sont superposées.

## Claims

1. Process for the continuous production of plates and/or products formed from a hydraulic setting paste with fibre reinforcements, according to which the hydraulic setting paste mixed with water is calendered to a given thickness and into which are then pressed textile-type fibre fragments coming from a cutter, **characterized in that**, prior to calendering, a fibrous additive is added to the hydraulic setting paste.

2. Process for the continuous production of plates and/or products formed from a hydraulic setting paste according to claim 1, **characterized in that** said fibrous additive comprises rock wool, formed from fibres having a mean diameter between 3 and 25 µm and sized either with an oil or with a surfactant alone or combined with an antifoaming substances.

3. Process for the production of plates and/or products formed from a hydraulic setting paste according to claims 1 or 2, **characterized in that** to the hydraulic setting paste is added a fibrous additive quantity between 0.5 and 2% for a textile-type fibre quantity between 1 and 5%.

4. Process for the continuous production of plates and/or products formed from a hydraulic setting paste according to claims 1 or 2, **characterized in that** application and/or incorporation takes place as a supplement of continuous fibres to the paste reinforced with fibre fragments.

5. Process for the production of plates and/or products formed from a hydraulic setting paste according to claim 4, **characterized in that** application and/or incorporation takes place of the continuous fibres on the surface of the paste reinforced with fibre fragments before the pressing operation.

6. Process for the continuous production of plates and/or products formed from a hydraulic setting paste according to one of the claims 1 to 5, **characterized in that** at least two continuously displaced, fibre fragment-reinforced paste layers are successively produced and superimposed.

## Patentansprüche

1. Verfahren zur kontinuierlichen Herstellung von Platten und/oder Formerzeugnissen aus einer faserverstärkten hydraulisch abbindenden Masse, gemäß welchem die mit Wasser angemachte hydraulisch abbindende Masse zu einer gegebenen Dicke kalandriert wird und anschließend von einer Schneidmaschine kommende Textilfaserstücke hineingepresst werden, **dadurch gekennzeichnet, dass** der hydraulisch abbindenden Masse vor dem Kalandrieren ein faserförmiges Zusatzmittel zugegeben wird.

2. Verfahren zur kontinuierlichen Herstellung von Platten und/oder Formerzeugnissen aus einer hydraulisch abbindenden Masse nach Anspruch 1, **dadurch gekennzeichnet, dass** das faserförmige Zusatzmittel Gesteinswolle umfasst, die aus Fasern mit einem mittleren Durchmesser von 3 bis 25 µm gebildet und entweder mit einem Öl oder mit einem -Tensid allein bzw. zusammen mit einem Schaumverhütungsmittel überzogen ist.

3. Verfahren zur Herstellung von Platten und/oder Formerzeugnissen aus einer hydraulisch abbindenden Masse nach Anspruch 1 oder 2, **dadurch gekennzeichnet, dass** zur hydraulisch abbindenden Masse ein Anteil an faserförmigem Zusatzmittel von 0,5 bis 2 % bei einem Textilfaser-Anteil von 1 bis 5 % zugegeben wird.

4. Verfahren zur kontinuierlichen Herstellung von Platten und/oder Formerzeugnissen aus einer hydraulisch abbindenden Masse nach Anspruch 1 oder 2, **dadurch gekennzeichnet, dass** zusätzlich endlose Fasern auf die durch Faserstücke verstärkte Masse aufgebracht und/oder in diese eingebaut werden.

5. Verfahren zur Herstellung von Platten und/oder Formerzeugnissen aus einer hydraulisch abbindenden Masse nach Anspruch 4, **dadurch gekennzeichnet, dass** die endlosen Fasern nach dem Pressvorgang auf die Oberfläche der durch Faserstücke verstärkten Masse aufgebracht und/oder eingebaut werden.

6. Verfahren zur kontinuierlichen Herstellung von Platten und/oder Formerzeugnissen aus einer hydraulisch abbindenden Masse nach einem der Ansprüche 1 bis 5, **dadurch gekennzeichnet, dass** mindestens zwei Schichten aus einer kontinuierlich vorwärtsbewegten und durch Faserstücke verstärkten Masse nacheinander übereinander hergestellt werden.
